# DEMANDE DE BREVET EUROPEEN

(11) **EP 3 974 088 A1**
(43) Date de publication de la demande: **30.03.2022**
(21) Numéro de dépôt: 21197624.6
(22) Date de dépôt: 20.09.2021
(51) Int. Cl.: B23D 11/00, B23Q 5/027

(54) **UNITÉ DE TAILLAGE D'UNE PIÈCE À USINER, ET PROCÉDÉ DE TAILLAGE CORRESPONDANT**

(30) Priorité: 28.09.2020 FR 2009837
(71) Demandeur: Nortools Concept, 61450 La Ferriere-aux-Etangs (FR)
(72) Inventeur: PILLU, Serge, 61220 LA COULONCHE (FR)
(74) Mandataire: Vidon Brevets & Stratégie

(57) **Abrégé**

Unité de taillage d'une pièce à usiner, ladite unité étant apte à transformer un mouvement de rotation d'un arbre d'entrée (5) en un mouvement de translation alternatif d'un outil de taillage (9), comprenant :
- une embase (1) comportant au moins un arbre d'entrée (5) rotatif, et une came (50) configurée pour être entrainée en rotation par ledit arbre d'entrée (5) ;
- un corps mobile (2) en contact avec ladite embase (1) et monté oscillante par rapport à ladite embase (1) autour d'un axe de rotation (27), ledit corps mobile (2) renfermant :
∘ une chape de basculeur (18) montée fixe dans ledit corps mobile (2) ;
∘ un basculeur (17) monté pivotant sur ladite chape de basculeur (18) autour d'un axe (16) et en appui contre ladite came (50) par l'intermédiaire d'un galet (15) ;

- un coulisseau (3), monté mobile en translation le long d'un axe (T) dans ledit corps mobile (2), et portant ledit outil de taillage (9) ;
- des moyens de transformation du mouvement dudit arbre d'entrée (5) comprenant :
∘ un vilebrequin (23) relié audit arbre d'entrée (5) par le biais d'un élément d'entrainement sphérique (13) ;
∘ un maneton (30) en contact avec ledit vilebrequin (23), et
∘ une bielle (31) reliée audit maneton (30) de sorte à fournir ledit mouvement de translation audit coulisseau (3),

le coulisseau (3) présentant :
- une première portion (3a) portant des premiers moyens de guidage en translation selon ledit axe (T) ;
- une deuxième portion (3b) portant ledit outil de taillage (9).

## Description

### 1. Domaine de l'invention

Le domaine de l'invention est celui des équipements de machines-outils, et plus particulièrement des unités de taillage de pièces, ou mortaisage, par exemple de pièces de précision pour le domaine aéronautique ou automobile.

Plus particulièrement encore, l'invention concerne une unité de taillage, ou de mortaisage, pour usiner des pièces, transformant un mouvement de rotation d'un arbre d'entrée en un mouvement de translation alternatif d'un outil de taillage.

De telles unités de taillage sont par exemple utilisées pour réaliser des formes, telles que des dentures, cannelures, dans ou autour d'une pièce à usiner, qui peut être une pièce métallique.

L'invention trouve notamment, mais non exclusivement, son application dans le domaine de la production industrielle de précision.

### 2. Art antérieur

Afin d'effectuer des usinages, notamment en métallurgie, il est connu de mettre en œuvre des machines-outils. Lors d'un achat de machine-outil, un utilisateur doit également acheter un ou plusieurs équipements de machines-outils de sorte à pouvoir effectuer son usinage.

Une machine-outil est un équipement mécanique destiné à exécuter, par le biais d'un équipement de machine-outil, un usinage, ou toute autre tâche répétitive, avec une précision et une puissance adaptées. C'est un moyen de production destiné à maintenir un outil fixe, mobile, ou tournant, et à lui imprimer un mouvement afin d'usiner ou déformer une pièce ou un ensemble fixé sur un mandrin ou une table fixe ou mobile.

Un tel équipement pour machine-outil peut, par exemple, être une unité de taillage (ou mortaisage) transformant un mouvement de rotation d'un arbre d'entrée relié à la machine-outil en un mouvement de translation alternatif d'un outil de taillage, de sorte à réaliser des usinages, dans ou autour d'une pièce à usiner. De tels usinages peuvent permettre d'obtenir une pièce finale présentant un creusement ou un pourtour triangulaire, carré, ou prenant tout autre forme envisageable.

Une telle unité de taillage, ou de mortaisage, est décrite en particulier dans le document EP 2 402 099.

L'unité de taillage, ou de mortaisage, comprend de manière classique une première partie de carter, ou embase, portant un arbre d'entrée rotatif, et une seconde partie de carter, ou corps mobile, adjacente à la première partie, comportant un coulisseau portant un outil de taillage muni d'une extrémité de travail, et des moyens pour transformer le mouvement de rotation de l'arbre d'entrée en un mouvement de translation alternatif de l'outil de taillage selon le cycle décrit ci-dessus. Ces moyens pour transformer le mouvement de rotation de l'arbre d'entrée en un mouvement de translation alternatif de l'outil de taillage porté par le coulisseau (qui peut également être un piston dans cet art antérieur) comprennent, de manière classique, notamment un vilebrequin, un maneton, et une bielle.

Un inconvénient des unités de taillage actuelles est que, lorsque l'on souhaite changer la course du coulisseau ou du piston, il est nécessaire de démonter l'unité de taillage de sorte à changer à la fois le vilebrequin et la bielle, puis remonter l'unité de taillage.

De telles manipulations nécessitent une connaissance de l'unité de taillage ainsi qu'un temps important ce qui n'est pas satisfaisant. En outre, le fait de monter et démonter régulièrement une unité de taillage engendre des risques de mauvaise manipulation ou montage, et donc des risques de travail moins précis ce qui n'est pas non plus satisfaisant.

En outre, un autre problème d'une telle unité de taillage est que, lors du taillage, les copeaux s'accumulent au niveau du coulisseau ainsi qu'au voisinage de l'outil de taillage et de l'usinage en cours ce qui peut perturber le travail de l'outil et détériorer à la fois l'outil de taillage et la pièce.

Une telle unité de taillage étant principalement utilisée dans du travail de précision, un tel inconvénient peut perturber cette précision ce qui n'est pas satisfaisant.

Il existe donc un besoin d'améliorer l'existant dans le cadre de ces unités de taillage de pièces à usiner.

L'invention a notamment pour objectif de pallier au moins en partie certains de ces inconvénients de l'art antérieur.

### 3. Exposé de l'invention

L'invention répond à ce besoin en proposant une unité de taillage d'une pièce à usiner, l'unité étant apte à transformer un mouvement de rotation d'un arbre d'entrée en un mouvement de translation alternatif d'un outil de taillage, comprenant :
- une embase comportant au moins un arbre d'entrée rotatif, et une came configurée pour être entrainée en rotation par l'arbre d'entrée ;
- un corps mobile en contact avec l'embase et monté oscillante par rapport à l'embase autour d'un axe de rotation, le corps mobile renfermant :
   ∘ une chape de basculeur montée fixe dans le corps mobile ;
   ∘ un basculeur monté pivotant sur la chape de basculeur autour d'un axe et en appui contre la came par l'intermédiaire d'un galet ;
- un coulisseau, monté mobile en translation le long d'un axe dans le corps mobile, et portant l'outil de taillage ;
- des moyens de transformation du mouvement de l'arbre d'entrée comprenant :
   ∘ un vilebrequin relié à l'arbre d'entrée par le biais d'un élément d'entrainement sphérique ;
   ∘ un maneton en contact avec le vilebrequin,
   ∘ une bielle reliée au maneton de sorte à fournir un mouvement de translation au coulisseau,
   le coulisseau présentant :

- une première portion portant des premiers moyens de guidage en translation selon un axe sensiblement orthogonal à l'axe de rotation de l'arbre d'entrée ;
- une deuxième portion portant l'outil de taillage.

Ainsi, l'invention propose une approche nouvelle et inventive permettant de résoudre au moins en partie les inconvénients de l'art antérieur.

Notamment, l'invention proposée permet de mettre en œuvre une unité de taillage présentant un coulisseau dont la course est réglable sans qu'il y ait un besoin de démonter l'unité de taillage.

En outre, une telle unité de taillage selon l'invention permet d'évacuer les copeaux issus du taillage de la pièce.

Selon au moins un aspect d'au moins un mode de réalisation, l'arbre d'entrée porte la came, cette came étant formée sur une face de l'arbre d'entrée en regard de l'élément d'entrainement sphérique.

Selon au moins un aspect d'au moins un mode de réalisation, la première portion présente un contour rectangulaire comportant au moins quatre patins de guidage ménagés à chacun des angles du contour, chacun des patins de guidage étant apte à coulisser dans au moins un rail de guidage ménagé dans le corps mobile.

Selon au moins un aspect d'au moins un mode de réalisation, le corps mobile présente au moins deux rails de guidage, préférentiellement quatre rails de guidage.

Selon au moins un aspect d'au moins un mode de réalisation, la deuxième portion présente une forme sensiblement cylindrique creuse délimitant un logement pour l'outil de taillage.

Selon au moins un aspect d'au moins un mode de réalisation, le coulisseau comprend un circuit de circulation d'un fluide de refroidissement et de lubrification de l'outil de taillage, le fluide étant apte à circuler entre au moins deux entrées de fluide ménagées au niveau de la première portion et deux sorties ménagées au niveau du logement.

Selon au moins un aspect d'au moins un mode de réalisation, l'unité de taillage comprend deux tubes lubrifiants montés coulissant au niveau de chacune des entrées de fluide et solidaires d'un capot du corps mobile ménagé en regard des entrées.

Selon au moins un aspect d'au moins un mode de réalisation, le fluide de refroidissement et de lubrification circulant dans le circuit de circulation à une pression comprise entre 5 et 80 bars.

Selon au moins un aspect d'au moins un mode de réalisation, l'unité de taillage comporte des premiers moyens d'étanchéité ménagés au niveau des entrées de fluide.

Selon au moins un aspect d'au moins un mode de réalisation, l'unité de taillage comprend en outre une entretoise entourant au moins partiellement l'arbre d'entrée de sorte à former contrepoids.

Selon au moins un aspect d'au moins un mode de réalisation, le vilebrequin présente une fente d'insertion délimitée par deux parois, dans laquelle vient coulisser un pion ménagé à une extrémité du maneton de sorte à régler la course du coulisseau.

Selon au moins un aspect d'au moins un mode de réalisation, le pion peut coulisser dans la fente d'insertion sur une longueur comprise entre 0mm et 40mm.

Selon au moins un aspect d'au moins un mode de réalisation, le pion présente un profil sensiblement trapézoïdal inversé, la fente d'insertion présentant un profil complémentaire de sorte à assurer un maintien du maneton au contact du vilebrequin.

Selon au moins un aspect d'au moins un mode de réalisation, le vilebrequin présente une rainure ménagée dans au moins une des deux parois, le vilebrequin présentant en outre trois orifices filetés sur la paroi comprenant la rainure, chacun des orifices étant apte à recevoir une vis de serrage.

Selon au moins un aspect d'au moins un mode de réalisation, l'élément de liaison entraineur sphérique comprenant deux extrémités formant chacune une rotule.

L'invention concerne encore un procédé de taillage d'une pièce à usiner par une unité de taillage selon l'un des modes de réalisation précités, le procédé étant initié par une mise en rotation de l'arbre d'entrée par le biais d'un élément d'entrainement relié à un moteur, comprenant les étapes successives suivantes :
- une étape d'avancée du coulisseau, portant l'outil de taillage, depuis une position initiale vers une position de travail dans la pièce à usiner, de sorte que l'outil de taillage retire de la matière dans la pièce à usiner en formant une forme rectiligne ;
- une étape de descente du coulisseau de sorte à éloigner l'outil de taillage de la pièce à usiner ;
- une étape de recul du coulisseau ;
- une étape de retour du coulisseau vers la position initiale.

Selon au moins un aspect d'au moins un mode de réalisation du procédé :
- l'étape d'avancée du coulisseau est effectuée par une rotation de 180 degrés de l'arbre d'entrée ; puis
- l'étape de descente du coulisseau est effectuée par une rotation de 10 degrés de l'arbre d'entrée ; puis
- l'étape de recul du coulisseau est effectuée par une rotation de 160 degrés de l'arbre d'entrée ; puis
- l'étape de retour du coulisseau vers la position de repos est effectuée par une rotation de 10 degrés de l'arbre d'entrée.

### 4. Exposé de l'invention

D'autres caractéristiques avantageuses de l'invention apparaîtront plus clairement à la lecture de la description suivante d'un mode de réalisation préférentiel de l'invention, donné à titre de simple exemple illustratif et non limitatif et des dessins annexés parmi lesquels :
[Fig 1] est une vue en coupe latérale d'une unité de taillage selon un mode de réalisation de l'invention ;
[Fig 2] est une vue en perspective de dessus de l'unité de taillage selon le mode de réalisation de la figure 1 ;
[Fig 3] est une vue en coupe depuis l'arrière de l'unité de taillage selon le mode de réalisation de la figure 1 ;
[Fig 4] est une vue en perspective d'un coulisseau selon un mode de réalisation de l'invention ;
[Fig 5] est une vue de l'arrière du coulisseau selon le mode de réalisation de la figure 4 ;
[Fig 6] est une vue de face du coulisseau selon le mode de réalisation de la figure 4;
[Fig 7] est une vue en perspective de dessous du coulisseau selon le mode de réalisation de la figure 4 ;
[Fig 8] est une vue en coupe de dessus du coulisseau selon le mode de réalisation de la figure 4, illustrant le circuit de circulation du fluide ;
[Fig 9] est une vue en perspective d'un bras basculeur selon un mode de réalisation de l'invention ;
[Fig 10] est une vue en perspective d'une chape de basculeur selon un mode de réalisation de l'invention ;
[Fig 11] est une vue en perspective d'un vilebrequin selon un mode de réalisation de l'invention ;
[Fig 12] est une vue en perspective d'un maneton selon un mode de réalisation de l'invention ;
[Fig 13] est une vue en perspective de l'arbre d'entrée selon un mode de réalisation de l'invention, et
[Fig 14] est une vue de dessus de l'arbre d'entrée selon le mode de réalisation de la figure 13, représentant la came et les différentes portions de sa surface.

### 5. Description d'un mode de réalisation

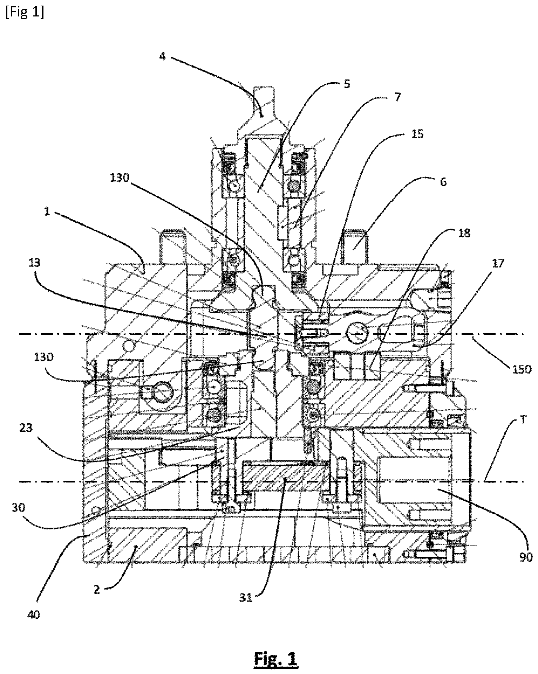

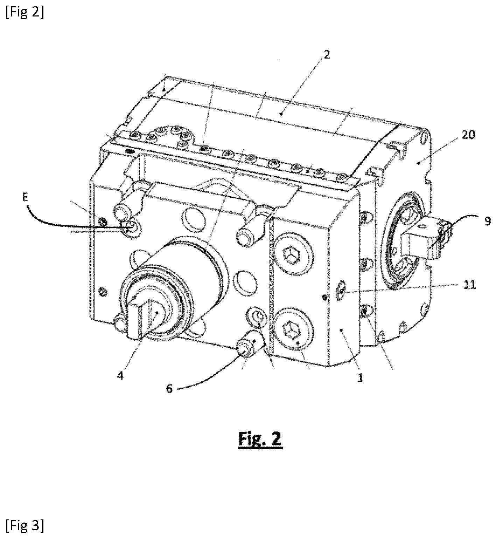

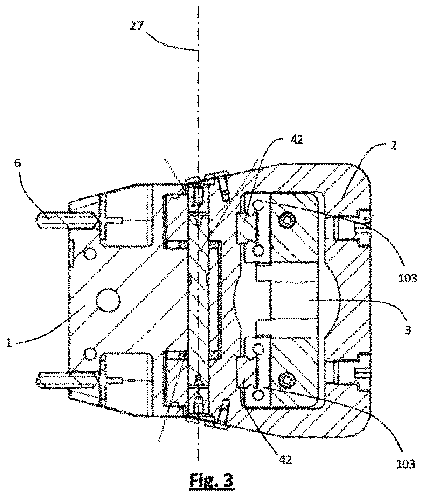

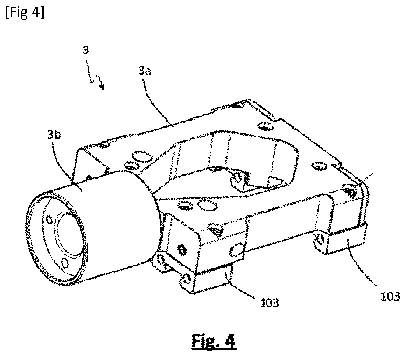

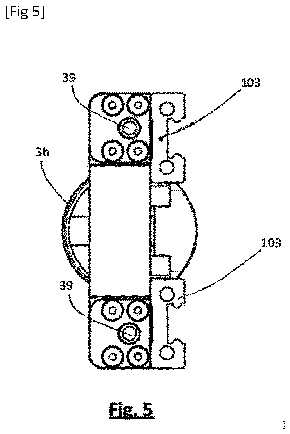

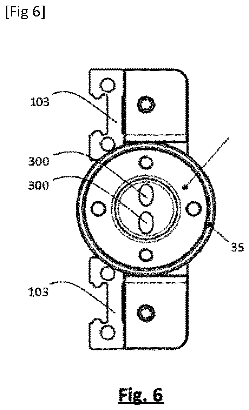

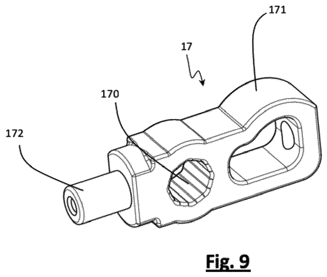

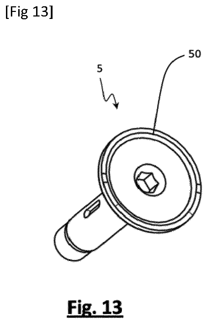

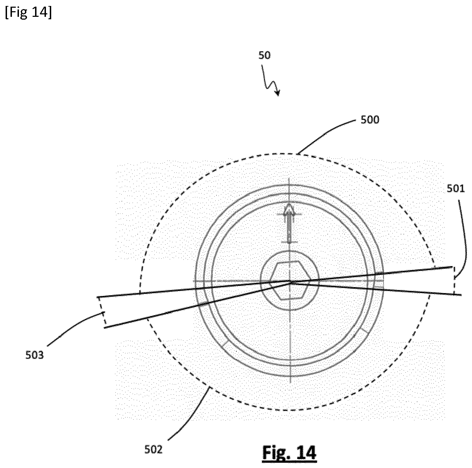

On présente maintenant, en relation avec les figures 1 à 14, un mode de réalisation de l'invention.

Comme déjà expliqué, une unité de taillage d'une pièce à usiner permet de transformer un mouvement de rotation d'un arbre d'entrée 5, relié à un moteur d'une machine-outil par le biais d'un entraîneur 4, en un mouvement de translation alternatif d'un outil de taillage 9.

Il est à noter que, lors du montage d'une unité de taillage sur une machine-outil, l'entraineur doit être indexé par rapport à l'entrainement de la machine-outil.

Cet outil de taillage peut, par exemple, être composé d'un porte plaquette de taillage muni d'une plaquette de coupe.

Cette unité de taillage comprend trois pièces principales :
- une embase 1;
- un corps mobile 2, et
- un coulisseau 3.

L'embase 1 comporte l'arbre rotatif 5 et une came 50 configurée pour être entrainée par l'arbre de rotation.

Plus particulièrement, dans ce mode de réalisation, l'arbre d'entrée 5 porte la came, celle-ci étant formée sur une face de l'arbre d'entrée 5 à l'opposé de la face en contact avec l'entraineur 4.

Selon une variante, l'arbre d'entrée et l'entraineur pourraient également être réalisés de manière monobloc.

En ce qui concerne le corps mobile 2, il est en contact avec l'embase 1 et est monté oscillante par rapport à cette embase 1 autour d'un axe de rotation 27.

Comme visible sur les figures, ce corps mobile 2 renferme :
∘ une chape de basculeur 18 montée fixe dans le corps mobile 2 ;
∘ un basculeur 17 monté pivotant sur la chape de basculeur 18 autour d'un axe 16 et en appui contre la came 50 par le biais d'un galet 15.

La fonction principale du basculeur 17 est de faire exécuter à l'outil de taillage le cycle de taillage, c'est-à-dire le procédé de taillage. Pour ce faire, il présente une partie cylindrique 172 portant le galet, un orifice 170 configuré pour être aligné avec les orifices 181 de la chape de basculeur, et une portion 171 présentant une forme partiellement sphérique qui vient en contact avec une vis de réglage de ce basculeur.

La chape de basculeur 18 selon l'invention permet de remplacer plusieurs pièces qui étaient mises en œuvre dans l'art antérieur et ainsi d'améliorer la compacité de l'invention. Elle présente deux ailettes portant chacune un orifice 181 de sorte à pouvoir monter le basculeur 17 de manière pivotante selon l'axe de basculeur 16.

Quant au coulisseau 3, il est monté mobile en translation le long d'un axe T dans le corps mobile 2, cet axe T de translation étant sensiblement orthogonal à l'axe de rotation de l'arbre 5. Ce coulisseau présente :
- une première portion 3a portant des premiers moyens de guidage en translation selon l'axe T, et
- une deuxième portion 3b portant l'outil de taillage 9.

Dans ce mode de réalisation, la première et la deuxième portions du coulisseau sont réalisées de manière monobloc, ce coulisseau étant usiné dans un alliage d'aluminium dur.

Le fait de mettre en œuvre un tel coulisseau en alliage d'aluminium dur permet d'avoir une matière de densité faible ce qui permet de réduire le déséquilibrage et le poids du coulisseau 3.

Cette première portion 3a présente, dans ce mode de réalisation, un contour rectangulaire comportant au moins quatre patins de guidage 103 ménagés à chacun des quatre angles du contour. Chacun de ces patins de guidage 103 est apte à coulisser dans au moins deux rails 42 de guidage ménagé dans le corps mobile 2 de sorte à permettre la translation selon l'axe T.

Ces patins peuvent, par exemple, être des patins à recirculation de billes.

Ici, les patins 103 présentent chacun une forme complémentaire à la forme des rails de sorte à assurer un maintien du coulisseau sur les rails durant la translation.

Selon les modes de réalisations, le corps mobile 2 présente au moins deux rails 42 de guidage, préférentiellement quatre rails 42 de guidage. De ce fait, cela permet de ne mettre en œuvre qu'un rail de guidage pour deux patins d'un même côté ou de mettre en œuvre un rail de guidage par patin.

Quant à la deuxième portion 3b, elle présente une chemise 35 de forme sensiblement cylindrique creuse délimitant un logement 90 pour l'outil de taillage 9.

Cette chemise est, dans ce mode de réalisation, réalisée dans un alliage d'acier trempé avec une nitruration ionique en surface de sorte à obtenir une dureté supérieure à 1000HV.

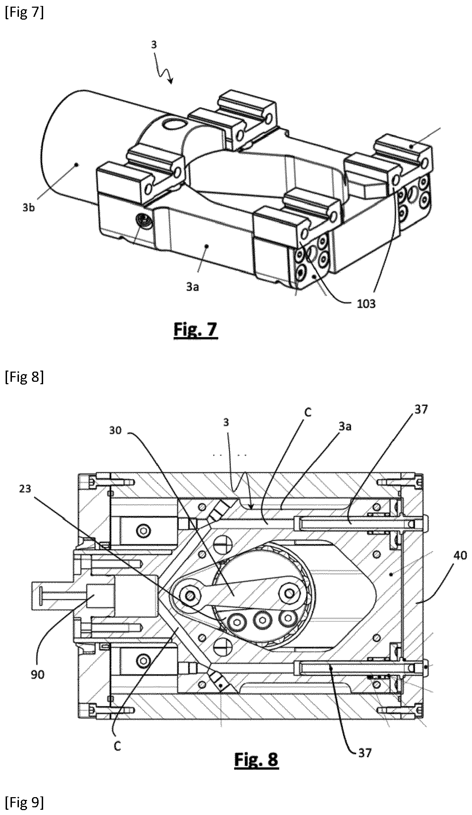

Le coulisseau comprend en outre, comme plus particulièrement visible en figure 8, un circuit C de circulation d'un fluide de refroidissement et de lubrification de l'outil de taillage.

Il est à noter que le liquide peut entrer par au moins une entrée E ménagée sur l'embase de l'unité de taillage.

Un tel circuit C de circulation de fluide de refroidissement et de lubrification permet de refroidir l'ensemble mécanique et d'évacuer les copeaux formés durant l'usinage de la pièce. Ce coulisseau permet ainsi, par sa forme, d'intégrer une circulation du fluide vers le centre du de la deuxième portion 3b du coulisseau, c'est-à-dire au plus proche de l'outil de taillage et de la zone d'usinage. De cette manière, les copeaux sont évacués plus facilement. Plus précisément, le lubrifiant est acheminé au niveau de deux orifices 300 c'est-à-dire au plus près de l'outil de taillage.

Il est à noter que, le fluide de refroidissement et de lubrification présent dans le circuit C de circulation, circule à une pression comprise entre 5 et 80 bars.

Dans ce circuit C, le fluide est apte à circuler entre deux entrées 39 de fluide ménagées au niveau de la première portion 3a et deux sorties ménagées au niveau des orifices 300.

Deux tubes lubrifiants 37 sont également implantés au niveau de chacune des entrées 39. Ces tubes lubrifiants sont solidaires d'un capot 40 du corps mobile et sont donc montés coulissant dans le circuit de circulation C de sorte que, pendant le mouvement du coulisseau, ces deux tubes lubrifiants 37 coulissent dans le circuit de circulation et restent fixés au capot 40.

De sorte à maintenir l'étanchéité au niveau de ce circuit, l'unité de taillage comporte des premiers moyens d'étanchéité ménagés au niveau des entrées 39 de fluide. Ces moyens d'étanchéité peuvent, par exemple, être des joints spécifiques haute pression.

Selon l'invention, l'unité de taillage comprend également des moyens de transformation du mouvement de rotation de l'arbre d'entrée 5 en un mouvement de translation alternatif de l'outil de taillage 9

Ces moyens de transformation, illustrés dans les différentes figures accompagnant la description, comprennent ici :
- un vilebrequin 23 relié à l'arbre d'entrée 5 par le biais d'un élément d'entrainement sphérique 13 ;
- un maneton 30 en contact avec le vilebrequin 23 ;
- une bielle 31 reliée au maneton 30 de sorte à fournir le mouvement de translation au coulisseau 3,

Comme visible notamment sur la figure 1, l'élément d'entrainement sphérique 13 comprend deux extrémités 130 formant chacune une rotule ayant une forme hexagonale sphérique.

L'intérêt de la forme hexagonale sphérique de ces rotules est que, lorsque le corps mobile 2 se pince à l'opposé de l'axe de rotation 27 lors d'une phase de descente du coulisseau (comme expliqué ci-dessous), la forme hexagonale sphérique permet un débattement angulaire entre le vilebrequin et l'arbre d'entrée 5 sans provoquer de point dur entre ces deux pièces.

Une de ces deux extrémités 130 est, ici, en contact avec la came 50 formée sur l'arbre d'entrée 5, et l'autre extrémité 130 est reliée au vilebrequin 23.

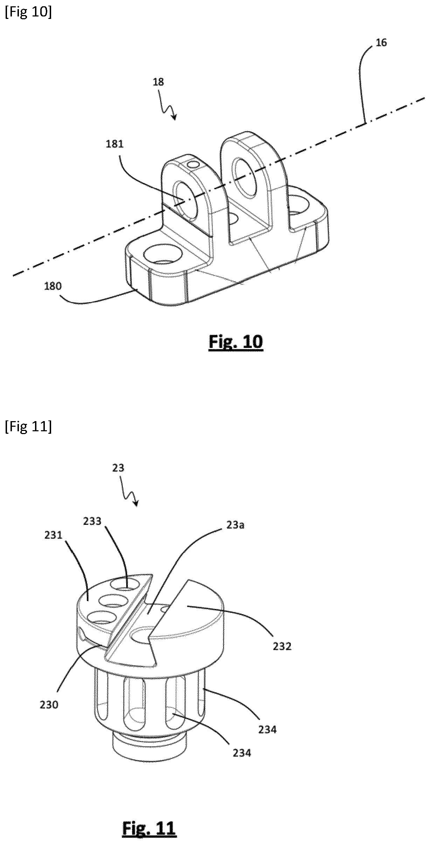

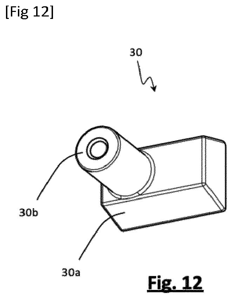

Ce vilebrequin 23, plus particulièrement illustré en figure 11, présente une fente d'insertion 23a délimitée par deux parois 231, 232, dans laquelle vient coulisser un pion 30a ménagé à une extrémité du maneton 30, illustré en figure 12.

De cette manière, cela permet de régler la course du coulisseau 3 et ce, de manière simple sans avoir à démonter l'intégralité de l'unité de taillage.

Plus particulièrement, dans ce mode de réalisation, le pion 30a peut coulisser dans la fente d'insertion 23a sur une longueur comprise entre 0mm et 40mm.

On pourrait également prévoir des unités de taillage dans lesquelles le pion peut coulisser dans la fente d'insertion sur une longueur comprise entre 0mm et 50mm.

De sorte à permettre ce coulissement, le pion 30a présente un profil sensiblement trapézoïdal inversé, la fente d'insertion 23a présentant un profil complémentaire de sorte à assurer un maintien du maneton 30 au contact du vilebrequin tout en n'entravant pas le coulissement.

Par ailleurs, le vilebrequin 23 présente une rainure 230 ménagée dans au moins une des deux parois 231, 232. Ce vilebrequin présente en outre trois orifices 233 filetés sur la paroi 231, 232 comprenant la rainure 230, chacun de ces orifices étant apte à recevoir une vis de serrage. De cette manière, cela permet de resserrer ou desserrer cette rainure afin de pouvoir régler la position du maneton 30.

Cette rainure 230 permet ainsi d'avoir une élasticité relative des parois du vilebrequin.

Ici, la rainure 230 est ménagée dans la paroi 231 du vilebrequin 23.

En ce qui concerne le maneton, il présente également une partie cylindrique 30b faisant saillie à la partie trapézoïdale 30a.

Il est à noter que l'unité de taillage comprend en outre une entretoise 7 entourant partiellement l'arbre d'entrée 5 de sorte à former contrepoids lors de la rotation de cet arbre d'entrée.

Encore un autre aspect de l'unité de taillage selon le mode de réalisation décrit est qu'elle comprend en outre des vis formant butées de sorte à maintenir en continu l'embase 1 et le corps mobile en pression l'un contre l'autre suivant l'axe de rotation 27 de sorte que le galet 15 soit toujours au contact de la came 50.

Ces vis peuvent, par exemple, être entourées d'au moins un ressort de compression de sorte à maintenir le galet en contact avec la came.

Comme visible, l'unité de taillage comprend également des vis 6 de fixation de l'embase.

On présente maintenant, en lien avec l'invention, le procédé de taillage d'une pièce à usiner par une unité de taillage selon l'un des modes de réalisation.

Ce procédé est initié par une mise en rotation de l'arbre d'entrée 5 par le biais de l'élément d'entrainement 4 relié à un moteur.

Cet arbre d'entrée 5 est, ici, mis en rotation dans un sens antihoraire. Il entraine l'entraineur sphérique 13 qui lui-même entraîne le vilebrequin 23 équipé du maneton 30. La bielle 31, qui fait le lien entre le maneton 30 et le coulisseau 3 entraîne en déplacement le coulisseau 3 qui lui-même se déplace en translation par le biais des patins de guidage 103 circulant dans les rails 42.

Le procédé de taillage comprend les étapes successives suivantes :
- une étape d'avancée du coulisseau 3, portant l'outil de taillage 9, depuis une position initiale vers une position de travail dans la pièce à usiner, de sorte que l'outil de taillage 9 retire de la matière dans la pièce à usiner en formant une forme rectiligne ;
- une étape de descente du coulisseau 3 de sorte à éloigner l'outil de taillage 9 de la pièce à usiner ;
- une étape de recul du coulisseau 3 ;
- une étape de retour du coulisseau 3 vers la position initiale.

Ainsi, le cycle est sensiblement un cycle rectangulaire voire carré.

Lors de l'étape d'avancée du coulisseau 3, l'arbre d'entrée 5 portant la came 50 est mis en rotation par l'intermédiaire de l'entraineur 4 au départ d'un cycle de taillage, le galet 15 qui est en contact sur la came 50 tourne autour de son axe 150 par l'intermédiaire, par exemple, d'une cage à aiguille. Quand le galet 15 est au contact de la zone 500 de la came 50, autrement appelée zone de travail, le coulisseau 3 avance.

Dans ce mode de réalisation, cette étape d'avancée du coulisseau est effectuée par une rotation de 180 degrés de la came autour de l'axe de rotation de l'arbre d'entrée 5.

Puis, lors de l'étape de descente du coulisseau, le galet 15 arrive au contact de la zone 501, autrement appelée zone de descente. Au début de cette zone de descente 501, le coulisseau 3 est arrivé à son point mort haut et l'outil de taillage 9 va commencer son dégagement de la pièce, dégagement qui est fini à la fin de la zone de descente 501.

Dans ce mode de réalisation, cette étape de descente du coulisseau est effectuée par une rotation de 10 degrés de la came autour de l'axe de rotation de l'arbre d'entrée 5.

Ensuite, lors de l'étape de recul du coulisseau, le galet arrive au contact de la zone 502 de la came 50, autrement appelée zone de dépincé, le coulisseau 3 recule.

Dans ce mode de réalisation, cette étape de recul du coulisseau est effectuée par une rotation de 160 degrés de la came autour de l'axe de rotation de l'arbre d'entrée 5.

Enfin, lors de l'étape de retour du coulisseau vers la position initiale, le galet arrive au contact de la zone 503 de la came 50, autrement appelée zone de montée. Durant la période de ce cycle, le coulisseau 3 monte pour arriver à son point mort haut, qui correspond à sa position initiale. Un nouveau cycle peut alors redémarrer par l'entame d'un nouveau tour de rotation de la came 50.

Ici, cette étape de retour du coulisseau est effectuée par une rotation de 10 degrés de la came autour de l'axe de rotation de l'arbre d'entrée 5.

## Revendications

1. Unité de taillage d'une pièce à usiner, ladite unité étant apte à transformer un mouvement de rotation d'un arbre d'entrée (5) en un mouvement de translation alternatif d'un outil de taillage (9), comprenant :
- une embase (1) comportant au moins un arbre d'entrée (5) rotatif, et une came (50) configurée pour être entrainée en rotation par ledit arbre d'entrée (5) ;
- un corps mobile (2) en contact avec ladite embase (1) et monté oscillante par rapport à ladite embase (1) autour d'un axe de rotation (27), ledit corps mobile (2) renfermant :
∘ une chape de basculeur (18) montée fixe dans ledit corps mobile (2) ;
∘ un basculeur (17) monté pivotant sur ladite chape de basculeur (18) autour d'un axe (16) et en appui contre ladite came (50) par l'intermédiaire d'un galet (15) ;
- un coulisseau (3), monté mobile en translation le long d'un axe (T) dans ledit corps mobile (2), et portant ledit outil de taillage (9) ;
- des moyens de transformation du mouvement dudit arbre d'entrée (5) comprenant :
∘ un vilebrequin (23) relié audit arbre d'entrée (5) par le biais d'un élément d'entrainement sphérique (13) ;
∘ un maneton (30) en contact avec ledit vilebrequin (23), et
∘ une bielle (31) reliée audit maneton (30) de sorte à fournir ledit mouvement de translation audit coulisseau (3),
le coulisseau (3) présentant :
- une première portion (3a) portant des premiers moyens de guidage en translation selon ledit axe (T) ;
- une deuxième portion (3b) portant ledit outil de taillage (9).

2. Unité de taillage selon la revendication 1, **caractérisé en ce que** ledit arbre d'entrée (5) porte ladite came (50), ladite came (50) étant formée sur une face dudit arbre d'entrée (5) en regard dudit élément d'entrainement sphérique (13).

3. Unité de taillage selon l'une des revendications précédentes, ladite première portion (3a) présentant un contour rectangulaire comportant au moins quatre patins de guidage (103) ménagés à chacun des angles dudit contour, chacun desdits patins de guidage (103) étant apte à coulisser dans au moins un rail (42) de guidage ménagé dans ledit corps mobile (2).

4. Unité de taillage selon la revendication 3, ledit corps mobile (3) présentant au moins deux rails (42) de guidage, préférentiellement quatre rails (42) de guidage.

5. Unité de taillage selon l'une des revendications précédentes, ladite deuxième portion (3b) présentant une forme sensiblement cylindrique creuse délimitant un logement (90) pour ledit outil de taillage (9).

6. Unité de taillage selon l'une des revendications précédentes, ledit coulisseau (3) comprenant un circuit (C) de circulation d'un fluide de refroidissement et de lubrification dudit outil de taillage, ledit fluide étant apte à circuler entre au moins deux entrées (39) de fluide ménagées au niveau de ladite première portion (3a) et deux sorties ménagées au niveau dudit logement (90).

7. Unité de taillage selon la revendication 6, **caractérisé en ce qu'**elle comprend deux tubes lubrifiants (37) montés coulissant au niveau de chacune desdites entrées (39) de fluide et solidaires d'un capot (40) dudit corps mobile (2) ménagé en regard desdites entrées (39).

8. Unité de taillage selon l'une des revendications 6 ou 7, ledit fluide de refroidissement et de lubrification circulant dans ledit circuit (C) de circulation à une pression comprise entre 5 et 80 bars.

9. Unité de taillage selon l'une des revendications 6 à 8, comportant des premiers moyens d'étanchéité ménagés au niveau desdites entrées (39) de fluide.

10. Unité de taillage selon l'une des revendications précédentes, **caractérisé en ce qu'**elle comprend en outre une entretoise (7) entourant au moins partiellement ledit arbre d'entrée (5) de sorte à former contrepoids.

11. Unité de taillage selon l'une des revendications précédentes, ledit vilebrequin (23) présentant une fente d'insertion (23a) délimitée par deux parois (231, 232), dans laquelle vient coulisser un pion (30a) ménagé à une extrémité dudit maneton (30) de sorte à régler la course dudit coulisseau (3).

12. Unité de taillage selon la revendication précédente, ledit pion (30a) pouvant coulisser dans ladite fente d'insertion (23a) sur une longueur comprise entre 0mm et 40mm.

13. Unité de taillage selon l'une des revendications 11 ou 12, le pion (30a) présentant un profil sensiblement trapézoïdal inversé, ladite fente d'insertion (23a) présentant un profil complémentaire de sorte à assurer un maintien dudit maneton (30) au contact dudit vilebrequin.

14. Unité de taillage selon l'une des revendications 11 à 13, le vilebrequin (23) présentant une rainure (230) ménagée dans au moins une desdites deux parois (231, 232), ledit vilebrequin présentant en outre trois orifices (233) filetés sur ladite paroi (231, 232) comprenant ladite rainure (230), chacun desdits orifices étant apte à recevoir une vis de serrage.

15. Unité de taillage selon l'une des revendications précédentes, ledit élément d'entrainement sphérique (13) comprenant deux extrémités (130) formant chacune une rotule.

16. Procédé de taillage d'une pièce à usiner par une unité de taillage selon l'une des revendications 1 à 15, le procédé étant initié par une mise en rotation de l'arbre d'entrée (5) par le biais d'un élément d'entrainement (4) relié à un moteur, comprenant les étapes successives suivantes :
- une étape d'avancée dudit coulisseau (3), portant ledit outil de taillage (9), depuis une position initiale vers une position de travail dans ladite pièce à usiner, de sorte que ledit outil de taillage (9) retire de la matière dans ladite pièce à usiner en formant une forme rectiligne ;
- une étape de descente dudit coulisseau (3) de sorte à éloigner ledit outil de taillage (9) de ladite pièce à usiner ;
- une étape de recul dudit coulisseau (3) ;
- une étape de retour dudit coulisseau (3) vers ladite position initiale.

17. Procédé de taillage selon la revendication précédente, **caractérisé en ce que** :
- ladite étape d'avancée dudit coulisseau (3) est effectuée par une rotation de 180 degrés dudit arbre d'entrée (5) ; puis
- ladite étape de descente dudit coulisseau (3) est effectuée par une rotation de 10 degrés dudit arbre d'entrée (5) ; puis
- ladite étape de recul dudit coulisseau (3) est effectuée par une rotation de 160 degrés dudit arbre d'entrée (5) ; puis
- ladite étape de retour dudit coulisseau (3) vers ladite position de repos est effectuée par une rotation de 10 degrés dudit arbre d'entrée (5).
